Europäisches Patentamt

European Patent Office

Office européen des brevets

(11) Veröffentlichungsnummer: **0 276 431**
**B1**

(12) # EUROPÄISCHE PATENTSCHRIFT

(45) Veröffentlichungstag der Patentschrift:
11.07.90

(21) Anmeldenummer: 87118238.2

(22) Anmeldetag: 09.12.87

(51) Int. Cl.⁵: **F01K 23/06**, F02C 3/20,
F22B 31/00, F23C 11/02,
B01J 8/00

(54) Aufgeladener, kohlebefeuerter Dampferzeuger.

(30) Priorität: 22.12.86 DE 3644030

(43) Veröffentlichungstag der Anmeldung:
03.08.88 Patentblatt 88/31

(45) Bekanntmachung des Hinweises auf die Patenterteilung:
11.07.90 Patentblatt 90/28

(84) Benannte Vertragsstaaten:
AT DE ES GB GR IT

(56) Entgegenhaltungen:
EP-A- 0 044 094
EP-A- 0 140 769
DE-A- 3 127 733
DE-A- 3 338 107
DE-A- 3 417 445
FR-A- 1 276 975
GB-A- 2 057 060
US-A- 3 139 726
US-A- 4 546 709

PATENT ABSTRACTS OF JAPAN, Band 10,
Nr. 365 (M-542)[2422], 6. Dezember 1986; &
JP-A-61 160 506 (KAWASAKI HEAVY IND.
LTD) 21-07-1986
PATENT ABSTRACTS OF JAPAN, Band 7,
Nr. 177 (M-233)[1322], 5. August 1983; &

(73) Patentinhaber: Siemens Aktiengesellschaft,
Wittelsbacherplatz 2, D-8000 München 2(DE)
Patentinhaber: Saarbergwerke Aktiengesellschaft,
Postfach 1030, Trierer
Strasse 1 D-6600 Saarbrücken(DE)

(72) Erfinder: Brückner, Hermann, Boggasse 3,
D-8521 Uttenreuth(DE)
Erfinder: Stadie, Lothar, Görlitzerstrasse 29,
D-8552 Höchstadt(DE)
Erfinder: Scholl, Gerhard, Robert-Koch-Strasse 8,
D-6683 Spiesen-Elversberg(DE)

(74) Vertreter: Fuchs, Franz-Josef, Dr.-Ing.,
Postfach 22 13 17, D-8000 München 22(DE)

(56) Entgegenhaltungen: (Fortsetzung)
JP-A-58 80 409 (ISHIKAWAJIMA HARIMA JUKOGYO
K.K.) 14-05-1983

## Beschreibung

Die Erfindung bezieht sich auf einen aufgeladenen, kohlebefeuerten Dampferzeuger für ein Gas- und Dampfturbinenkraftwerk mit einer an dessen Abgasleitung angeschlossenen Gasturbine, einem der Gasturbine gasseitig nachgeschalteten Abhitzedampferzeuger und einer am Abhitzedampferzeuger dampfseitig angeschlossenen Dampfturbine.

Gas- und Dampfturbinenkraftwerke mit einem aufgeladenen kohlebefeuerten Dampferzeuger sind schon in verschiedenen Druckschriften, wie z.B. in der DE-OS 31 23 391, vorgeschlagen worden, weil diese Kraftwerkskonzeption hohe Gesamtwirkungsgrade verspricht und der Investitionsaufwand weit unter jenem liegt, der für ein Gas- und Dampfturbinenkraftwerk mit vorgeschaltetem Kohlevergaser erforderlich ist. Gas- und Dampfturbinenkraftwerke mit einem aufgeladenen kohlebefeuerten Dampferzeuger sind jedoch bisher nicht über das Versuchsstadium hinaus gediehen. Es hat sich nämlich gezeigt, daß die Lebensdauer der Gasturbine durch die Staubbelastung der Abgase sehr stark verkürzt wird. Andererseits ist bei den am Eingang der Gasturbine herrschenden hohen Gaseintrittstemperaturen keine hinreichend effektive Entstaubung der Abgase möglich.

Der Erfindung liegt daher die Aufgabe zugrunde, einen Weg zu weisen, Kohle in einem kohlebefeuerten Dampferzeuger hinreichend staubfrei zu verbrennen, damit dessen Abgase in einer Gasturbine ohne nennenswerte Beeinträchtigung deren Lebensdauer, Arbeit leisten können. Außerdem sollte die Verbrennung so verlaufen, daß möglichst wenig Stickoxide gebildet werden, um den Emissionsbestimmungen zu genügen.

Diese Aufgabe wird durch die Merkmale des Anspruchs 1 gelöst. Weitere Ausgestaltungen der Erfindung sind den Unteransprüchen zu entnehmen.

Infolge des Aufbaus des aufgeladenen, kohlebefeuerten Dampferzeugers aus einer unterstöchiometrisch betriebenen Wirbelschichtfeuerungsanlage, einem der Wirbelschichtfeuerungsanlage nachgeschalteten, integrierten Staubabscheider und eine mit ihren Brennern dem Staubabscheider gasseitig nachgeschalteten Dampferzeugerschmelzkammer wird einerseits für eine niedrige Verbrennungstemperatur in der Wirbelschicht gesorgt, so daß die Stickoxidbildung hier weitgehend unterbleibt und wird andererseits wegen der permanenten Verwirbelung der Partikel dennoch ein vollständiger Ausbrand erreicht. Zugleich werden die von dem in der Wirbelschichtfeuerungsanlage gebildeten Brenngas mitgerissenen Staubpartikel im integrierten Staubabscheider weitestgehend von den Brenngasen abgetrennt, so daß den Brennern der Dampferzeugerschmelzkammer ein nahezu staubfreies, im wesentlichen kohlenmonoxidhaltiges Gas zugeleitet wird. Die allenfalls noch mitgerissenen Aschepartikel schmelzen bei den hohen Temperaturen der Schmelzkammer auf und agglomerieren zu kleinen Tröpfchen. Sie fallen schwerkraftbedingt nach unten und können in einer am unteren Ende der Dampferzeugerschmelzkammer angeschlossenen Ascheabzugsleitung abgeführt werden. All das führt dazu, daß die die Dampferzeugerschmelzkammer verlassenden Abgase weitestgehend staubfrei sind.

Die Staubfreiheit der die Dampferzeugerschmelzkammer verlassenden Abgase kann noch weiter gesenkt werden, wenn die Innenwand der Dampferzeugerschmelzkammer in Ausgestaltung der Erfindung einen zylindrischen Querschnitt hat und die Brenner tangential in dieser Innenwand angeordnet sind. Hierdurch wird in der Schmelzkammer eine Drehströmung induziert, die die noch im Brenngas enthaltenen Aschepartikel zur Wand der Dampferzeugerschmelzkammer befördert. Dort kann die verflüssigte, klebrige Asche an der Wand nach unten zur Ascheabzugsleitung fließen. Infolge ihrer klebrigen Konsistenz hält sie alle mit ihr in Berührung kommenden Partikel fest und trägt so nicht unerheblich zur Reinigung des Abgases bei.

Eine weitere Verringerung des Ascheeintrags in die Ascheschmelzkammer kann in Weiterbildung der Erfindung durch Vorschalten weiterer Zyklone vor den Brennern der Dampferzeugerschmelzkammer erreicht werden.

Besonders vorteilhaft ist es, wenn die Dampferzeugerschmelzkammer in Ausgestaltung der Erfindung unmittelbar in den Strahlraum übergeht. Durch diese Maßnahme wird in Verbindung mit der Drehströmung in der Ascheschmelzkammer der Austrag an erschmolzenen und im Strahlraum durch Abkühlung wieder verfestigten Aschepartikeln über den langen Weg durch den Strahlraum noch weiter verbessert und wird mit geringstmöglichem Aufwand zugleich auch eine Übertragung der fühlbaren Wärme der Abgase an den Wasserdampfkreislauf gewährleistet.

Weitere vorteilhafte Ausgestaltungen der Erfindung werden anhand eines in der FIG dargestellten Ausführungsbeispiels erläutert. Es zeigt:

Die FIG ein Gas- und Dampfturbinenkraftwerk mit einem erfindungsgemäßen aufgeladenen, kohlebefeuerten Dampferzeuger.

Die FIG zeigt einen Längsschnitt durch den aufgeladenen, kohlebefeuerten Dampferzeuger 1 und das an ihn angeschlossene Gas- und Dampfturbinenkraftwerk 2 sowie die dem aufgeladenen Dampferzeuger 1 vorgeschaltete Kohleaufbereitungsanlage 3 in schematisch vereinfachter Darstellung. Der aufgeladene, kohlebefeuerte Dampferzeuger 1 enthält in seinem unteren Abschnitt zwei zu beiden Seiten eines Ascheabscheidezyklons 4 angeordnete Wirbelschichtbrennkammern 5,6, deren Düsenböden 7,8 an eine an einen Luftverdichter 9,10 angeschlossene, die Bauelemente des Dampferzeugers gehäuseartig umschließende Frischluftleitung 11 angeschlossen sind. Oberhalb des Düsenbodens 7,8 einer jeden Wirbelschichtbrennkammer mündet je eine an die Kohleaufbereitungsanlage 3 angeschlossene Brennstoffleitung 12,13. Im Freiraum oberhalb der jeweiligen stationären Wirbelschichten 14,15 der Wirbelschichtbrennkammern 5,6 sind Wärmetauscherheizflächen 16,17,18,19 angeordnet, die in hier nicht weiter dargestellter Weise an den Wasserdampfkreislauf des Gas- und Dampfturbinenkraftwerks 2 angeschlossen sind. Der Abscheidezyklon 4 zwischen den beiden Wirbelschichtbrennkammern 5,6 besteht im wesentlichen aus zwei konzentrischen Rohren 20,21, von denen das äußere Rohr 20 an seinem oberen, ansonsten geschlossenen Ende an dort tangential einmündende Abgaskanäle 22,23 der beiden Wirbelschichtbrennkammern 5,6 angeschlossen ist und an seinem unteren Ende trichterförmig in eine Ascheabzugsleitung 24 mündet. Das innere Rohr 21 ist an seinem unteren Ende offen. Es taucht bis kurz über das untere trichterförmige Ende des äußeren Rohres 20 in dieses ein. Das innere Rohr 21 mündet im Ausführungsbeispiel an seinem oberen Ende in zwei beidseitig desselben angeordnete zusätzliche Abscheidezyklone 25,26.

Die Abscheidezyklone 25,26 sind an ihrem unteren Ende an je eine Ascheabzugsleitung 27,28 und abgasseitig an die Brenner 29,30 einer oberhalb der Wirbelschichtbrennkammer 5,6 angeordneten Dampferzeugerschmelzkammer 31 angeschlossen. Diese Brenner 29,30 sind tangential zur zylindrischen Innenwand der Dampferzeugerschmelzkammer 31 und mit ihrer Symmetrieachse 32,33 etwas nach unten geneigt ausgerichtet. Sie sind an die Frischluftleitung 11 angeschlossen. Die Dampferzeugerschmelzkammer 31 ist innen mit einer Schamottierung 34 ausgekleidet und an ihrem unteren Ende trichterförmig ausgebildet. An diesem trichterförmigen Ende schließt sich ein mit einer Wassersprühanlage 35 versehener Ascheauffangtrichter 36 an, der seinerseits in eine weitere Ascheabzugsleitung 37 mündet. An dieser Dampferzeugerschmelzkammer 31 schließt sich das untere Ende eines zylindrischen Strahlraumes 38 an. Der Strahlraum ist mit einer am Wasserdampfkreislauf des Gas- und Dampfturbinenkraftwerks 2 angeschlossenen Flossenrohrwand 39 versehen. Er trägt an seinem oberen Ende Konvektionsheizflächen 40 sowie eine Abgasabzugsleitung 41.

Die den Strahlraum 38 verlassende Abgasabzugsleitung 41 ist unmittelbar an die Gasturbine 42 des Gas- und Dampfturbinenkraftwerks 2 angeschlossen. Die Abgasleitung 43 der Gasturbine führt über einen Abhitzekessel 44 mit weiteren an den Wasserdampfkreislauf angeschlossenen Wärmetauscherheizflächen 45,46 zum Kamin 47. Die Wärmetauscherheizflächen des Abhitzekessels sind in hier nicht weiter dargestellter Weise an den Wasserdampfkreislauf einer Dampfturbine 48 angeschlossen. Sowohl die Dampfturbine 48 als auch die Gasturbine 42 treiben je einen Generator 49,50 an. Zusätzlich treibt die Gasturbine 42 auch noch den Luftverdichter 9 an. Der andere, zum Anfahren und im Störungsfall gebrauchte Luftverdichter 10, wird von einem Elektromotor 51 angetrieben.

Die dem aufgeladenen, kohlebefeuerten Dampferzeuger 1 vorgeschaltete Kohleaufbereitungsanlage 3 enthält einen Kohlebunker 52, ein dem Kohlebunker nachgeschaltetes Mahlwerk 53, einen Bunker 54 für gebrannten Kalk und eine an der Brennstoffleitung 12,13 angeschlossene Dosiervorrichtung 55 für den gebrannten Kalk.

Beim Betrieb des Gas- und Dampfturbinenkraftwerks 2 wird aus dem Kohlebunker 52 Kohle entnommen, vermahlen und mit dosiert zugegebenem Kalk aus dem Bunker 54 vermischt. Dieses Brennstoffgemisch wird über die Brennstoffleitungen 12,13 oberhalb der Düsenböden 7,8 in die beiden Wirbelschichtbrennkammern 5,6 eingeführt. Zugleich wird über den Luftverdichter 9 der Gasturbine 42 Frischluft angesaugt, verdichtet und über die die Abgasabzugsleitung 41 und die Bauelemente 4,5,6,25,26,31,38 des Dampferzeugers 1 gehäuseartig umschließende Frischluftleitung 11 durch die Düsen der Düsenböden 7,8 in die Wirbelschichtbrennkammer 5,6 hereingedrückt. Durch die so eingeblasene, vorgewärmte Frischluft werden die Brennstoffpartikel in den stationär betriebenen Wirbelschichtbrennkammern 5,6 aufgewirbelt und infolge der unterstöchiometrischen Luftmenge im wesentlichen zu Wasserdampf und Kohlenmonoxid verbrannt. Infolge unterstöchiometrischer Verbrennung steigt die Temperatur in der Wirbelschicht nicht über 900 °C. Sie kann durch Beimischung von Abgas zur Frischluft, welche mittels eines in einer Hilfsleitung 56 eingebauten Regelventils 57 auf einen jeweils gewünschten Wert zwischen 750 °C und 850 °C einreguliert werden. Ein Teil der Wärme der Wirbelschichtbrennkammern 5,6 kann dabei durch die in den Freiraum oberhalb der jeweiligen stationären Wirbelschichten 14,15 in die Wirbelschichtbrennkammern eintauchenden Wärmetauscherheizflächen 16 bis 19 an den Wasserdampfkreislauf der Dampfturbine 48 abgegeben werden.

Die die Wirbelschichtbrennkammern 5,6 verlassenden Brenngase strömen über die Abgaskanäle 22,23 tangential in den Spalt zwischen dem inneren und äußeren Rohr 20,21 des integrierten Ascheabscheidezyklon 4 ein und erzeugen in diesem eine starke, abwärts gerichtete Drehströmung. Die mitgerissenen Aschepartikel strömen infolge der Fliehkraft längs der Wand dieses äußeren Rohres 20 nach unten in das trichterförmige untere Ende desselben und gelangen von dort in die Ascheabzugsleitung 54. Die weitgehend von Staub befreiten Brenngase steigen dann durch das innere Rohr 21 dieses Abscheidezyklons 4 auf und werden im Ausführungsbeispiel in noch einen zusätzlichen Abscheidezyklon 25 bzw. 26 geleitet. Aus diesen beiden zueinander parallel geschalteten Abscheidezyklonen gelangt das nahezu staubfreie Brenngas in die tangential in der Außenwand der Ascheschmelzkammer 31 eingelassenen Brenner 29,30 und wird dort mit weiterer Frsichluft aus der Frischluftleitung 11 verbrannt. Diese Frischluft strömt den beiden Brennern über Regelventile 58,59 aus der Frischluftleitung zu.

Da die Frischluftleitung 11 als Mantel um die Abgasabzugsleitung 41, den Strahlraum 38, die Ascheschmelzkammer 31, die Abscheidezyklone 4,25,26 und die Wirbelschichtbrennkammern 5,6 ausgebildet ist, ist die Frischluft bereits vor Eintritt in die Brenner der Ascheschmelzkammer bzw. in die Düsenböden der Wirbelschichtbrennkammer aufgeheizt. Dies bringt den Vorteil mit sich, daß die Frischluft diese Bauelemente kühlt, sich dabei aufheizt und diese Wärme wieder in den Prozeß zurückführt. Eine besondere Wärmedämmung dieser sehr heißen Bauelemente erübrigt sich somit. Es genügt vielmehr, die Außenwand der Frischluftleitung, die auf einem wesentlich niedrigeren Temperaturniveau liegt, mit einer Wärmedämmung zu versehen, um die Wärmeverluste des Dampferzeugers 1 zu minimieren. Darüber hinaus werden durch den Gasdruck der Frischluft, die nur ganz geringfügig vom Gasdruck in den Wirbelbrennkammern und im Strahlraum 38 abweicht, die thermisch stark belasteten Bauelemente druckmäßig entlastet.

Die Temperatur ist in der Ascheschmelzkammer 31 so hoch gewählt, daß eventuell mitgerissene feinste Aschepartikel aufschmelzen und in der durch die tangentiale Anordnung der Brenner erzeugten Drehströmung verwirbeln, agglomerieren und an die schamottierte Außenwand der Ascheschmelzkammer getragen werden. Von dort fließt die klebrigflüssige Asche in den trichterförmigen Boden der Ascheschmelzkammer ab und tropft von dort sich verfestigend durch die Wassersprühanlage 35 in den gekühlten Ascheauffangtrichter 36, von wo sie über die Ascheabzugsleitung 37 abgezogen wird. Alle an die Innenwand der Ascheschmelzkammer getragenen Partikel bleiben an der dort herabfließenden klebrigen Asche hängen und werden mit dieser ausgetragen. Dieser Effekt trägt stark zur Reinigung des Abgases von Partikeln aller Art bei.

Die Abgase der Dampferzeugerschmelzkammer 31 durchströmen den oberhalb der Dampferzeugerschmelzkammer angeordneten und unmittelbar in diese übergehenden Strahlraum 38, wobei sie ihre Wärme durch Strahlung an dessen Flossenrohrwände 39 abgeben. Am oberen Ende des Strahlraumes durchströmen sie die dort angeordneten Konvektionsheizflächen 40, wo sie weitere Wärme an den Wasserdampfkreislauf des Dampfturbinenkraftwerks abgeben und gelangen über die von der zuströmenden Frischluft gekühlte Abgasabzugsleitung 41 zur Gasturbine 42. Die Gasturbine treibt den Luftverdichter 9 und den Generator 50 an. Nach dem Verlassen der Gasturbine durchströmen die Abgase den Abhitzekessel 44, wo sie ihre fühlbare Wärme über die Wärmetauscherheizflächen 45,46 an den Wasserdampfkreislauf des Dampfturbinenkraftwerks abgeben, um schließlich in den Kamin 47 zu entweichen.

Es ist ein großer Vorteil dieses Gas- und Dampfturbinenkraftwerks 2, daß die hohen Gastemperaturen, die zum Betrieb einer Gasturbine benötigt werden, von diesem aufgeladenen Dampferzeuger nicht nur problemlos erreicht werden können, sondern daß außerdem dessen Abgase so staubfrei sind, daß eine Lebensdauer der Gasturbine 39 erreicht werden dürfte, die vergleichbar jener ist, die hinter Kohlevergasungsanlagen erreichbar sind. Darüber hinaus ist es ein besonderer Vorteil dieses aufgeladenen, kohlebefeuerten Dampferzeugers, daß relativ wenig Stickoxide entstehen, weil infolge der unterstöchiometrischen Verbrennung in den Wirbelschichten 14,15 nur Temperaturen entstehen, bei denen wenig Stickoxide gebildet werden und weil zusätzlich die relativ stark reduzierende Atmosphäre der Stickoxidbildung entgegensteht. In den Flammen der Brenner 29,30 der Ascheschmelzkammer 31 werden wegen des hohen CO-Anteils nur verhältnismäßig wenig Stickoxide gebildet. Schließlich erlaubt die Verwendung einer Wirbelschicht als erster Verbrennungsstufe die dosierte Zugabe von Additiven, die Schwefelverbindungen in der Asche bindet. Das hat zur Folge, daß in den Abgasen auch relativ wenig Schwefeloxide enthalten sind. Schließlich baut der aufgeladene, kohlebefeuerte Dampferzeuger mit den vorgeschalteten Wirbelschichtbrennkammern und der nachgeschalteten Ascheschmelzkammer wesentlich kompakter und platzsparender und technisch weniger aufwendig als eine Gas- und Dampfturbinenanlage mit vorgeschalteter Kohlevergasung. Diese letztere Eigenschaft führt auch zu einer deutlichen Einsparung an Investitionskosten. Der erfindungsgemäße kohlebefeuerte Dampferzeuger läßt sich aber auch bei solchen Anlagen mit Vorteil einsetzen, wo extrem staubfreie Abgase auf höchstem Temperaturniveau, wie etwa in einem Röhrenspaltofen, benötigt werden.

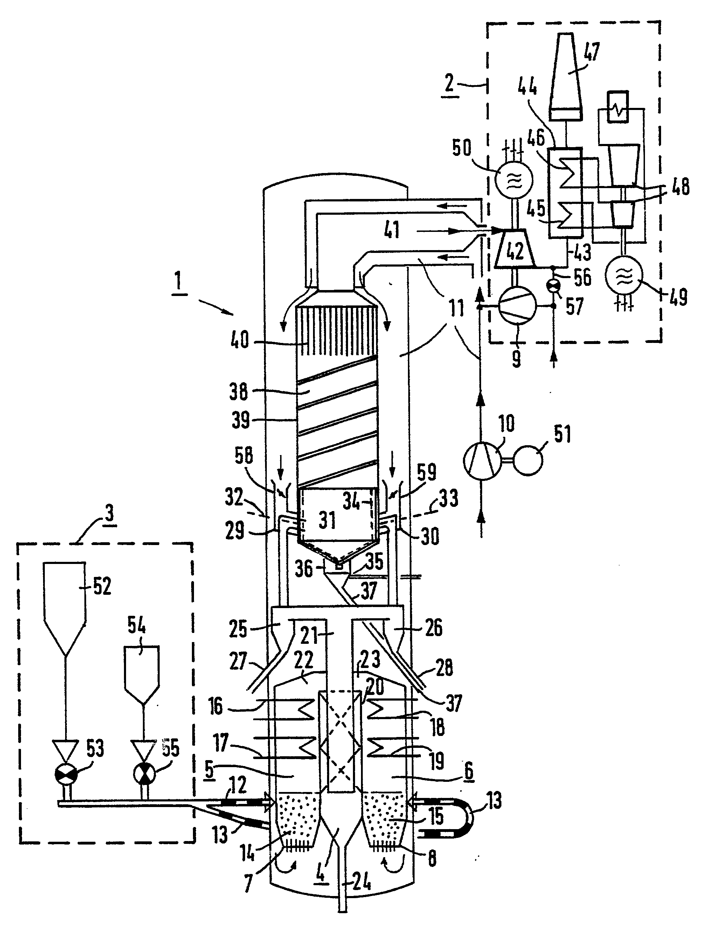

## Patentansprüche

1. Aufgeladener, kohlebefeuerter Dampferzeuger für ein Gas- und Dampfturbinenkraftwerk mit einer an dessen Abgasableitung angeschlossenen Gasturbine, einem der Gasturbine gasseitig nachgeschalteten Abhitzedampferzeuger und einer am Abhitzedampferzeuger dampfseitig angeschlossenen Dampfturbine, **dadurch gekennzeichnet,** daß der kohlebefeuerte Dampferzeuger (1) mindestens eine unterstöchiometrisch betriebene Wirbelschichtfeuerungsanlage (5,6), einen der Wirbelschichtfeuerungsanlage nachgeschalteten, integrierten Staubabscheider (4) und eine mit ihren Brennern (29,30) dem Staubabscheider gasseitig nachgeschaltete Dampferzeugerschmelzkammer (31) umfaßt.

2. Aufgeladener, kohlebefeuerter Dampferzeuger nach Anspruch 1, **dadurch gekennzeichnet,** daß die Innenwand der Dampferzeugerschmelzkammer (31) einen zylindrischen Querschnitt hat.

3. Aufgeladener, kohlebefeuerter Dampferzeuger nach Anspruch 3, **dadurch gekennzeichnet,** daß die Brenner (29,30) der Dampferzeugerschmelzkammer (1) zur Unterstützung der Ascheabscheidung tangential zur Wandoberfläche angeordnet sind.

4. Aufgeladener, kohlebefeuerter Dampferzeuger nach Anspruch 1, **dadurch gekennzeichnet,** daß den Brennern (29,30) der Dampferzeugerschmelzkammer (31) zusätzlich zum integrierten Staubabscheider (4) weitere Zyklone (25,26) vorgeschaltet sind.

5. Aufgeladener, kohlebefeuerter Dampferzeuger nach Anspruch 1, **dadurch gekennzeichnet,** daß die Dampferzeugerschmelzkammer (31) abgasseitig an einen Strahlraum (38) angeschlossen ist.

6. Aufgeladener, kohlebefeuerter Dampferzeuger nach Anspruch 5, **dadurch gekennzeichnet,** daß die Dampferzeugerschmelzkammer (31) unmittelbar in den Strahlraum (38) übergeht.

7. Aufgeladener, kohlebefeuerter Dampferzeuger nach Anspruch 5, **dadurch gekennzeichnet,** daß die Wände des Strahlraumes (38) als Flossenrohrwände (39) ausgebildet sind.

8. Aufgeladener, kohlebefeuerter Dampferzeuger nach Anspruch 5, **dadurch gekennzeichnet,** daß am austrittseitigen Ende des Strahlraumes (38) Konvektionsheizflächen (40) angeordnet sind.

9. Aufgeladener, kohlebefeuerter Dampferzeuger nach Anspruch 1, **dadurch gekennzeichnet,** daß der Boden der Dampferzeugerschmelzkammer (31) trichterförmig ausgebildet und an eine Ascheabzugsleitung (37) angeschlossen ist.

10. Aufgeladener, kohlebefeuerter Dampferzeuger nach Anspruch 9, **dadurch gekennzeichnet,** daß am unteren trichterförmigen Ende der Dampferzeugerschmelzkammer ein mit einer Wassersprühanlage (35) ausgebildeter Ascheauffangtrichter (36) vorgesehen ist.

11. Aufgeladener, kohlebefeuerter Dampferzeuger nach Anspruch 1, **dadurch gekennzeichnet,** daß der stationären Wirbelschicht (14,15) außer Kohle auch noch Additive zur Entschwefelung zugeführt werden.

12. Aufgeladener, kohlebefeuerter Dampferzeuger nach Anspruch 11, **dadurch gekennzeichnet,** daß der Kohle gebrannter Kalk beigemischt wird.

13. Aufgeladener, kohlebefeuerter Dampferzeuger nach Anspruch 1, **gekennzeichnet** durch eine stationäre Wirbelschichtfeuerungsanlage (5,6).

14. Aufgeladener, kohlebefeuerter Dampferzeuger nach Anspruch 13, **dadurch gekennzeichnet,** daß im Gasraum oberhalb der stationären Wirbelschicht (14,15) Wärmetauscherheizflächen (16 bis 19) eingebaut sind.

15. Aufgeladener, kohlebefeuerter Dampferzeuger nach Anspruch 13, **dadurch gekennzeichnet,** daß mehrere stationäre Wibelschichtbrennkammern (5,6) konzentrisch um den integrierten Staubabscheider (4) angeordnet sind.

16. Aufgeladener, kohlebefeuerter Dampferzeuger nach Anspruch 1, **gekennzeichnet** durch eine zirkulierende Wirbelschichtfeuerungsanlage.

17. Aufgeladener, kohlebefeuerter Dampferzeuger nach Anspruch 1, **dadurch gekennzeichnet,** daß die Ascheabzugsleitung des integrierten Staubabscheiders einen Teil des abgeschiedenen Staubes in die Wirbelschicht der Wirbelschichtfeuerungsanlage zurückführt.

18. Aufgeladener, kohlebefeuerter Dampferzeuger nach Anspruch 1, **dadurch gekennzeichnet,** daß die Frischluftleitung (11) die Abgasabzugsleitung (41) des Dampferzeugers (1) und diesen selbst gehäuseartig umschließt.

**Claims**

1. A forced induction, coal-fired steam generator for a gas and steam turbine power plant with a gas turbine connected to its exhaust line, a waste heat steam generator connected downstream on the gasside of the gas turbine and a steam turbine connected to the steam side of the waste heat steam generator, characterised in that the coal-fired steam generator (1) includes at least one sub-stoichiometrically driven fluidized bed furnace system (5, 6), an integrated dust separator (4) connected downstream of the fluidized bed furnace system and a steam generator melting chamber (31) having burners (29, 30), connected, on the gas side, downstream of the dust separator (4).

2. A forced induction, coal-fired steam generator according to claim 1, characterised in that the inner wall of the steam generator melting chamber (31) has a cylindrical cross-section.

3. A forced induction, coal-fired steam generator according to claim 3, characterised in that the burners (29, 30) of the steam generator melting chamber (1) are arranged tangentially to the wall surface for assisting the ash extraction.

4. A forced induction, coal-fired steam generator according to claim 1, characterised in that further cyclones (25, 26) are connected upstream of the burners (29, 30) of the steam generator melting chamber (31) in addition to the integrated dust separator (4).

5. A forced induction, coal-fired steam generator according to claim 1, characterised in that the steam generator melting chamber (31) is connected on the exhaust gas side to a jet chamber (38).

6. A forced induction, coal-fired steam generator according to claim 5, characterised in that the steam generator melting chamber (31) passes directly into the jet chamber (38).

7. A forced induction, coal-fired steam generator according to claim 5, characterised in that the walls of the jet chamber (38) are constructed as finned tube walls (39).

8. A forced induction, coal-fired steam generator according to claim 5, characterised in that arranged on the outlet side of the jet chamber (38) there are convection heating surfaces (40).

9. A forced induction, coal-fired steam generator, according to claim 1, characterised in that the base of the steam generator melting chamber (31) is constructed in the form of a funnel and is connected to an ash outlet line (37).

10. A forced induction, coal-fired steam generator according to claim 9, characterised in that on the lower funnel-shaped end of the steam generator melting chamber there is provided an ash collecting cone (36) constructed with a water spray system (35).

11. A forced induction, coal-fired steam generator according to claim 1, characterised in that the stationary fluidized bed (14, 15) is supplied with additives other than coal for desulfuration.

12. A forced induction, coal-fired steam generator, according to claim 11, characterised in that the coal is mixed with burnt lime.

13. A forced induction, coal-fired steam generator, according to claim 13, characterised by a stationary fluidized bed furnace system (5, 6).

14. A forced induction, coal-fired steam generator, according to claim 13, characterised in that incorporated in the gas chamber above the stationary fluidized bed (14, 15) there are heat exchanger heating surfaces (16 to 19).

15. A forced induction, coal-fired steam generator, according to claim 13, characterised in that several stationary fluidized bed combustion chambers (5, 6) are arranged concentrically around the integrated dust separator (4).

16. A forced induction, coal-fired steam generator according to claim 1, characterised by a circulating fluidized bed furnace system.

17. A forced induction, coal-fired steam generator according to claim 1, characterised in that the ash outlet line of the integrated dust separator reconveys a part of the separated dust into the fluidized bed of the fluidized furnace system.

18. A forced induction, coal-fired steam generator, according to claim 1, characterised in that the fresh air line (11) surrounds, in a housing-like manner, the exhaust gas line (41) of the steam generator (1) as well as the latter.

**Revendications**

1. Générateur de vapeur sous pression et chauffé au charbon, pour une centrale de production d'électricité à turbine à gaz et à turbine à vapeur, comprenant une turbine à gaz reliée à son conduit d'évacuation du gaz d'échappement, un générateur de vapeur par récupération de la chaleur monté en aval du côté gaz de la turbine à gaz, et une turbine à vapeur reliée du côté vapeur au générateur de vapeur par récupération de la chaleur perdue, caractérisé en ce que, le générateur de vapeur (1) chauffé au charbon comprend au moins une installation de chauffe à lit fluidisé (5, 6), fonctionnant hypostoechiométriquement, un séparateur de poussières (4) intégré, monté en aval de l'installation de chauffe à lit fluidisé, et une chambre de fusion du générateur de vapeur (31) montée avec ses brûleurs (29, 30) en aval du côté gaz du séparateur de poussière.

2. Générateur de vapeur sous pression et chauffé au charbon suivant la revendication 1, caractérisé en ce que, la paroi intérieure de la chambre de fusion du générateur de vapeur (31) présente une section transversale cylindrique.

3. Générateur de vapeur sous pression et chauffé au charbon suivant la revendication 3, caractérisé en ce que, les brûleurs (29, 30) de la chambre de fusion du générateur de vapeur (1) sont, pour favoriser le dépôt des cendres, disposés tangentiellement à la surface de la paroi.

4. Générateur de vapeur sous pression et chauffé au charbon suivant la revendication 1, caractérisé en ce que, d'autres cyclones (25, 26) sont montés, en plus du séparateur de poussière (4) intégré, en amont des brûleurs (29, 30) de la chambre de fusion du générateur de vapeur (31).

5. Générateur de vapeur sous pression et chauffé au charbon suivant la revendication 1, caractérisé en ce que, la chambre de fusion du générateur de vapeur (31) est reliée, du côté du gaz d'échappement, à une chambre de rayonnement (38).

6. Générateur de vapeur sous pression et chauffé au charbon suivant la revendication 5, caractérisé en ce que, la chambre de fusion du générateur de vapeur (31) se poursuit directement par la chambre de rayonnement (38).

7. Générateur de vapeur sous pression et chauffé au charbon suivant la revendication 5, caractérisé en ce que, les parois de la chambre de rayonnement (38) sont constituées en parois tubulaires à tubes nervurés (39).

8. Générateur de vapeur sous pression et chauffé au charbon suivant la revendication 5, caractérisé en ce que, à l'extrémité de la chambre de rayonnement (38), se trouvant du côté de la sortie, sont disposées des surfaces de chauffage (40) par convexion.

9. Générateur de vapeur sous pression et chauffé au charbon suivant la revendication 1, caractérisé en ce que, le fond de la chambre de fusion du générateur de vapeur (31) est en forme de trémie et est relié à un conduit d'évacuation des cendres (37).

10. Générateur de vapeur sous pression et chauffé au charbon suivant la revendication 9, caractérisé en ce que, à l'extrémité inférieure en forme de trémie de la chambre de fusion du générateur de vapeur est prévue une trémie de collecte des cendres (36) constituée sous la forme d'une installation de pulvérisation d'eau (35).

11. Générateur de vapeur sous pression et chauffé au charbon suivant la revendication 1, caractérisé en ce que, au lit fluidisé (14, 15) fixe, sont envoyés, outre du charbon, des additifs pour la désulfuration.

12. Générateur de vapeur sous pression et chauffé au charbon suivant la revendication 11, caractérisé en ce que, de la chaux vive est mélangée au charbon.

13. Générateur de vapeur sous pression et chauffé au charbon suivant la revendication 1, caractérisé par, une installation de chauffe à lit fluidisé (5, 6) qui est fixe.

14. Générateur de vapeur sous pression et chauffé au charbon suivant la revendication 13, caractérisé en ce que, dans l'espace réservé au gaz, au-dessus du lit fluidisé (14, 15) fixe, sont montées des surfaces de chauffe à échangeur de chaleur (16 à 19).

15. Générateur de vapeur sous pression et chauffé au charbon suivant la revendication 13, caractérisé en ce que, plusieurs chambres de combustion à lit fluidisé (5, 6) fixes sont montées concentriquement autour du séparateur de poussière (4) intégré.

16. Générateur de vapeur sous pression et chauffé au charbon suivant la revendication 1, caractérisé par, une installation de chauffe à lit fluidisé circulant.

17. Générateur de vapeur sous pression et chauffé au charbon suivant la revendication 1, caractérisé en ce que, le conduit d'évacuation des cendres du séparateur de poussière intégré retourne au lit fluidisé de l'installation de chauffe à lit fluidisé, une partie de la poussière déposée.

18. Générateur de vapeur sous pression et chauffé au charbon suivant la revendication 1, caractérisé en ce que, le conduit pour l'air frais (11) entoure, à la manière d'une enveloppe, le conduit d'évacuation des gaz d'échappement (41) du générateur de vapeur (1) et également ce dernier.